# FASCICULE DE BREVET EUROPEEN

(11) **EP 3 728 906 B1**
(45) Date de publication et mention de la délivrance du brevet: **15.09.2021**
(21) Numéro de dépôt: 18819149.8
(22) Date de dépôt: 19.12.2018
(51) Int. Cl.: F16H 61/4139

(54) **CIRCUIT D'ASPIRATION DE POMPE**
PUMPENSAUGKREIS
PUMP SUCTION CIRCUIT

(30) Priorité: 19.12.2017 FR 1762456
(43) Date de publication de la demande: 28.10.2020
(73) Titulaire: Poclain Hydraulics Industrie, 60410 Verberie (FR)
(72) Inventeur: LUCIENNE, Philippe, 60410 Verberie (FR); CHARLIER, Lilian, 60410 Verberie (FR); PRIGENT, André, 60410 Verberie (FR)
(74) Mandataire: Regimbeau
(86) Numéro de dépôt international: PCT/EP2018/085813
(87) Numéro de publication internationale: WO 2019/121893

(56) Documents cités:
- EP-A1- 2 361 798
- EP-A2- 1 172 588
- DE-A1-102009 049 995
- US-B1- 9 388 892

## Description

### DOMAINE TECHNIQUE

L'invention concerne un dispositif de transmission hydraulique d'un véhicule.

L'invention vise plus spécifiquement l'alimentation d'une pompe de gavage d'un dispositif de transmission hydraulique d'un véhicule.

### ETAT DE LA TECHNIQUE

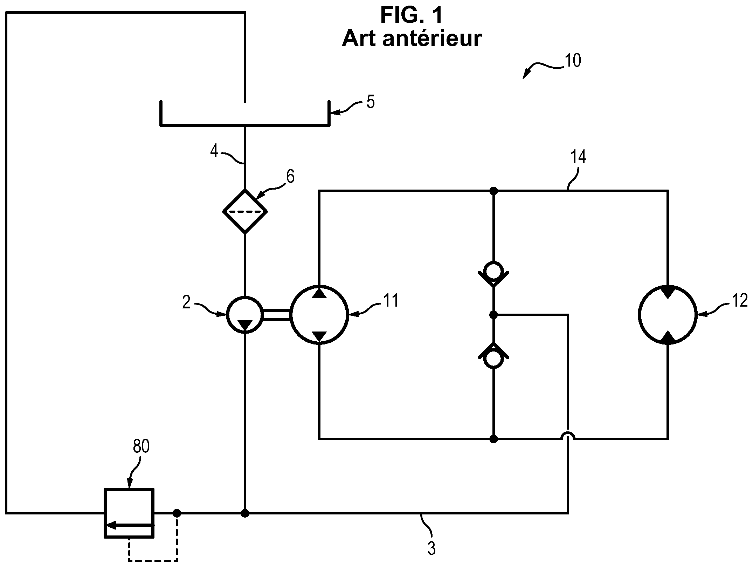

En référence à la figure 1, un dispositif de transmission hydraulique 10 d'un véhicule comprend, de manière connue, une pompe principale 11, configurée pour alimenter en fluide hydraulique au moins un moteur hydraulique 12, une pompe de gavage 2 configurée pour établir, et maintenir, une pression de fluide minimale dans un conduit 3 du dispositif de transmission hydraulique 10 afin de compenser les fuites hydrauliques et de piloter divers organes (non représentés) de circuit hydraulique 14, et au moins un moteur hydraulique 12. En outre, la pompe principale 11 et la pompe de gavage 2 peuvent être actionnées par des moyens d'entraînement (non représentés) identiques ou distincts, de sorte à délivrer un fluide sous pression. Les moyens d'entraînement peuvent, par exemple, lier les pompes 11, 2 à un moteur thermique (non représenté) et/ou à un moteur électrique.

Un tel dispositif de transmission hydraulique 10 peut, par exemple, être monté sur un véhicule pour permettre, en cas de besoin, d'actionner le moteur hydraulique 12 comme moteur d'appoint ou d'assistance, dans des conditions de déplacement difficiles du véhicule, comme un sol glissant, une forte pente, etc. Typiquement, le au moins un moteur hydraulique 12 est agencé sur un essieu du véhicule. Ainsi, lorsque le dispositif de transmission hydraulique 10 est activé, le véhicule dispose de roues motrices supplémentaires.

Un tel dispositif, et son mode de fonctionnement, sont par exemple décrits dans la demande EP 2 361 798, au nom de la Demanderesse.

En fonctionnement, le véhicule ne requiert pas systématiquement l'assistance hydraulique. Ainsi, lorsque l'assistance n'est pas requise, la pompe principale 11 est débrayée, ou tourne à cylindrée nulle, tandis que la pompe de gavage 2 est entraînée pour maintenir une pression minimale au sein du dispositif de transmission hydraulique 10.

Or, lorsqu'un tel dispositif 10 est mis en oeuvre à des températures basses, l'entraînement de la pompe de gavage 2 peut générer des phénomènes de cavitation, notamment au démarrage du véhicule et/ou du dispositif de transmission hydraulique 10.

En effet, comme visible sur la figure 1, la pompe de gavage 2 aspire du fluide hydraulique à partir d'un réservoir 5 par l'intermédiaire d'une ligne d'alimentation 4. Cette ligne d'alimentation 4 doit être maintenue à une pression minimale de fonctionnement, qui dépend de la perte de charge entre le réservoir 5 et la pompe de gavage 2. La perte de charge est influencée par différents paramètres dont la viscosité du fluide hydraulique, les caractéristiques structurelles de la ligne d'alimentation 4 (dimensions, filtres intermédiaires 6, etc.), la hauteur de charge, qui correspond à l'altitude relative du réservoir 5 par rapport à la pompe de gavage 2, ou encore par la vitesse de rotation de la pompe de gavage 2 (débit aspiré).

Ainsi, des températures extrêmement basses entraînent une augmentation importante de la viscosité, aboutissant aux phénomènes de cavitation de la pompe de gavage 2, lesdits phénomènes étant nuisibles au fonctionnement de la pompe de gavage 2. De plus, même si la mise en circulation du fluide hydraulique par la pompe de gavage 2 entraîne un réchauffement progressif de celui-ci, le volume, généralement important, du réservoir 5 cause une inertie thermique qui ralentit ce réchauffement.

Il est alors connu de procéder à des vidanges saisonnières, par exemple deux fois par an, une fois avant l'été et une fois avant l'hiver, afin de disposer, suivant les conditions climatiques, d'un fluide hydraulique adapté aux températures de fonctionnement. Ceci représente cependant des contraintes et des coûts de fonctionnement importants.

Il existe donc un besoin de dispositif de transmission hydraulique pouvant fonctionner sur une plus large plage de température, notamment à des températures extrêmement basses, sans en endommager les éléments principaux, notamment la pompe de gavage et sans besoin de changer de viscosité de fluide hydraulique par une vidange.

Le document EP 1 172 588 A divulgue un ensemble de gavage comprenant une soupape de démarrage à froid.

### RESUME DE L'INVENTION

Un but de l'invention est d'augmenter la plage de fonctionnement en température d'un dispositif de transmission hydraulique d'un véhicule.

Un autre but de l'invention est de réduire le nombre de vidanges nécessaires au fonctionnement d'un dispositif de transmission hydraulique d'un véhicule.

Un autre but de l'invention est d'augmenter la durée de vie de pompe de gavage d'un dispositif de transmission hydraulique d'un véhicule.

L'invention propose notamment un ensemble de gavage pour dispositif de transmission hydraulique comprenant :
- une pompe de gavage configurée pour établir, et maintenir, une pression de fluide minimale dans un conduit du dispositif de transmission hydraulique, ladite pompe de gavage comprenant :
   ∘ un orifice de refoulement relié audit conduit, et
   ∘ un orifice d'admission, et
- une première ligne d'alimentation reliée d'une part à un premier réservoir de fluide d'hydraulique, et d'autre part à l'orifice d'admission,
- une deuxième ligne d'alimentation reliée d'une part à l'orifice de refoulement, et d'autre part à l'orifice d'admission, et
- un deuxième réservoir agencé sur la deuxième ligne d'alimentation.

Dans un tel ensemble, la deuxième ligne d'alimentation peut avantageusement posséder une inertie thermique inférieure à celle de la première ligne d'alimentation et du premier réservoir. Autrement dit, le circuit hydraulique formé par la deuxième ligne d'alimentation est plus court que le circuit hydraulique constitué de la première ligne d'alimentation et du premier réservoir. La pompe de gavage peut ainsi sélectivement aspirer du fluide hydraulique à partir de l'une ou l'autre, ou des deux lignes d'alimentation à la fois. La deuxième ligne d'aspiration crée donc un circuit court sans passer par le réservoir principal, ce qui permet d'augmenter la température de l'huile circulant dans la pompe de gavage. Le fluide hydraulique se réchauffant plus rapidement lorsqu'il circule à travers la deuxième ligne d'alimentation, le phénomène de cavitation de la pompe de gavage à basse température est réduit, voire disparaît. Ceci aboutit ainsi à une augmentation de la durée de vie de la pompe de gavage. Une augmentation de la plage de fonctionnement en température du dispositif de transmission hydraulique, une réduction du nombre de vidanges nécessaire, et un temps de réchauffage réduit pour obtenir la performance optimum de l'ensemble de gavage, sont dès lors obtenus.

L'ensemble de gavage selon l'invention peut en outre comprendre les caractéristiques suivantes prises seules ou en combinaison :
- il comprend un limiteur de pression agencé sur la deuxième ligne d'alimentation,
- le deuxième réservoir de fluide hydraulique est un carter de la pompe de gavage,
- il comprend des moyens de sélection configurés pour permettre l'alimentation de la pompe de gavage via son orifice d'alimentation par :
   ∘ la première ligne d'alimentation, ou
   ∘ la deuxième ligne d'alimentation, ou
   ∘ à la fois la première ligne et la deuxième ligne d'alimentation,
- les moyens de sélection sont pilotés par des moyens thermosensibles, de sorte que la position des moyens de sélection contrôlant l'alimentation en fluide hydraulique de l'orifice d'alimentation dépend de la température du fluide hydraulique,
- les moyens de sélection sont pilotés électriquement,
- le pilotage électrique dépend d'une information relative à la température du fluide hydraulique,
- le pilotage électrique dépend d'une information relative à la vitesse de la pompe de gavage,
- les moyens de sélections comprennent un distributeur proportionnel, à deux orifices et au moins deux positions comprenant :
   ∘ un premier orifice relié à l'orifice d'admission, et
   ∘ un deuxième orifice relié à la deuxième ligne d'alimentation, le distributeur comprenant en outre :
      ∘ une position extrême passante dans lequel il relie le premier orifice au deuxième orifice, et
      ∘ une position extrême bloquante dans lequel il isole le premier orifice du deuxième orifice,
- les moyens de sélection comprennent un distributeur proportionnel, à trois orifices et au moins trois positions comprenant :
   ∘ un premier orifice relié à l'orifice d'admission,
   ∘ un deuxième orifice relié à la deuxième ligne d'alimentation, et
   ∘ un troisième orifice relié au premier réservoir,
   le distributeur comprenant en outre :
   ∘ une première position extrême dans lequel il relie le premier orifice au deuxième orifice, et isole le troisième orifice,
   ∘ une deuxième position intermédiaire dans lequel il relie le deuxième orifice et le premier orifice, au troisième orifice, par l'intermédiaire d'une restriction hydraulique, et
   ∘ une troisième position extrême dans lequel :
      ▪ il relie le deuxième orifice et le troisième orifice, et
      ▪ il isole le premier orifice,
- les moyens de sélection comprennent un distributeur proportionnel, à trois orifices et au moins trois positions comprenant :
   ∘ un premier orifice relié à l'orifice d'admission,
   ∘ un deuxième orifice relié à la deuxième ligne d'alimentation, et
   ∘ un troisième orifice relié à la première ligne d'alimentation,
   le distributeur comprenant en outre :
   ∘ une première position extrême dans lequel :
      ▪ il relie le premier orifice au troisième orifice, et
      ▪ il isole le deuxième orifice,
   ∘ une deuxième position intermédiaire dans lequel il relie le deuxième orifice au premier orifice et au troisième orifice, par l'intermédiaire d'une restriction hydraulique, et
   ∘ une troisième position extrême dans lequel :
      ▪ il relie le premier orifice et le deuxième orifice, et
      ▪ il isole le troisième orifice, et
- il comprend en outre une pompe principale configurée pour alimenter en fluide hydraulique un circuit hydraulique de transmission, la pompe principale et la pompe de gavage partageant le même carter.

L'invention porte en outre sur un véhicule comprenant un ensemble de gavage tel que précédemment décrit.

L'invention porte enfin sur un procédé de gestion de l'alimentation d'un ensemble de gavage d'un dispositif de transmission hydraulique tel que précédemment décrit, le procédé comprenant les étapes de :
- alimentation de la pompe de gavage par l'intermédiaire de la deuxième ligne d'alimentation si la température de fluide hydraulique est inférieure à un premier seuil,
- alimentation de la pompe de gavage par l'intermédiaire de la première ligne et de la deuxième ligne d'alimentation si la température de fluide hydraulique est comprise entre le premier seuil et un deuxième seuil, le pourcentage de débit de fluide hydraulique en provenance de la deuxième ligne évoluant continument entre 100% et 0%, au fur et à mesure de l'évolution de la température du fluide hydraulique entre le premier seuil de température et le deuxième seuil de température, et
- alimentation de la pompe de gavage par l'intermédiaire de la première ligne d'alimentation si la température de fluide hydraulique est supérieure au deuxième seuil.

### DESCRIPTIF RAPIDE DES FIGURES

D'autres caractéristiques, buts et avantages de la présente invention apparaitront à la lecture de la description détaillée qui va suivre et en regard des dessins annexés donnés à titre d'exemple non limitatif et sur lesquels :
- la figure 1, déjà décrite, illustre schématiquement un ensemble de gavage pour dispositif de transmission hydraulique d'un véhicule connu de l'art antérieur,
- la figure 2 illustre schématiquement un premier exemple de réalisation d'un ensemble de gavage pour dispositif de transmission hydraulique d'un véhicule selon l'invention,
- la figure 3 illustre schématiquement un deuxième exemple de réalisation d'un ensemble de gavage pour dispositif de transmission hydraulique d'un véhicule selon l'invention,
- la figure 4 illustre schématiquement un troisième exemple de réalisation d'un ensemble de gavage pour dispositif de transmission hydraulique d'un véhicule selon l'invention,
- la figure 5 illustre schématiquement un quatrième exemple de réalisation d'un ensemble de gavage pour dispositif de transmission hydraulique d'un véhicule selon l'invention,
- la figure 6a illustre un exemple d'évolution du pourcentage de débit de fluide hydraulique alimentant une pompe de gavage, en provenance d'une première ligne d'alimentation et/ou d'une deuxième ligne d'alimentation, en fonction de l'évolution de la température du fluide hydraulique et du temps,
- la figure 6b illustre un exemple d'évolution du pourcentage de débit de fluide hydraulique alimentant une pompe de gavage, en provenance d'une première ligne d'alimentation et/ou d'une deuxième ligne d'alimentation, en fonction de la vitesse de rotation de la pompe de gavage, et
- la figure 7 est un organigramme qui illustre des étapes d'un exemple de réalisation de procédé de gestion de l'alimentation d'un ensemble de gavage d'un dispositif de transmission hydraulique selon l'invention.

### DESCRIPTION DETAILLEE DE L'INVENTION

En référence aux figures, on va maintenant décrire un ensemble de gavage 1 pour dispositif de transmission hydraulique 10, notamment d'assistance hydraulique.

Un tel ensemble 1 comprend une pompe de gavage 2 configurée pour établir, et maintenir, une pression de fluide minimale dans un conduit 3 du dispositif de transmission hydraulique. La pompe de gavage 2 permet notamment de combler les pertes éventuelles de fluide hydraulique au sein du dispositif de transmission hydraulique 10. Comme il apparaîtra de la description qui va suivre, la pompe de gavage 2 fonctionne en circuit ouvert.

La pompe de gavage 2 est typiquement une pompe à engrenage, notamment un gerotor. A titre d'alternative, la pompe de gavage 2 peut être du type à palettes, à pistons axiaux ou radiaux.
La pompe de gavage 2 comprend un orifice de refoulement 200 relié fluidiquement au conduit 3 du dispositif de transmission hydraulique 10, et par lequel la pompe de gavage 2 débite un fluide hydraulique au sein du dispositif de transmission hydraulique 10. En outre, la pompe de gavage 2 comprend un orifice d'admission 202 relié fluidiquement à une extrémité d'une première ligne d'alimentation 4, l'autre extrémité de la première ligne d'alimentation 4 étant reliée fluidiquement à un premier réservoir de fluide hydraulique 5. La pompe de gavage 2 est ainsi alimentée en fluide hydraulique en provenance du premier réservoir hydraulique 5, par l'intermédiaire de la première ligne d'alimentation 4.
Avantageusement, comme visibles sur les figures 1 à 5, l'ensemble 1 comprend en outre un dispositif de filtration 6 disposé entre le premier réservoir hydraulique 5 et l'orifice d'admission 202, permettant de filtrer le fluide hydraulique avant son admission dans le dispositif de transmission hydraulique 10. Le retrait des impuretés contenues dans le fluide hydraulique permet en effet de préserver les éléments tournants du dispositif de transmission hydraulique 10, et notamment les parties tournantes internes de la pompe de gavage 2. Le dispositif de filtration 6 allonge alors avantageusement la durée de vie de l'ensemble 1, mais induit une perte de charge sur la ligne d'alimentation 4.
De manière privilégiée, la pompe de gavage 2 est entraînée par un moteur thermique (non représenté), directement ou par l'intermédiaire de moyens d'embrayages, de manière connue de l'homme de l'art. A titre d'alternative, la pompe de gavage 2 peut être entrainée par un moteur électrique et être part d'un groupe électropompe (GEP).

L'ensemble 1 comprend en outre une deuxième ligne d'alimentation 7 dont une extrémité est également reliée fluidiquement à l'orifice d'admission 202 de la pompe de gavage 2, l'autre extrémité étant reliée fluidiquement à l'orifice de refoulement 200 de la pompe de gavage 2.

Un deuxième réservoir 8 est agencé sur la deuxième ligne d'alimentation 7. L'autre extrémité de la ligne d'alimentation 7 est alors reliée fluidiquement à l'orifice de refoulement 200 de la pompe de gavage 2 par l'intermédiaire du deuxième réservoir de fluide hydraulique 8.

Le circuit hydraulique constitué par la deuxième ligne d'alimentation 7, et du deuxième réservoir hydraulique 8, possède une inertie thermique inférieure à l'inertie thermique du circuit hydraulique formé par la première ligne d'alimentation 4 et le premier réservoir hydraulique 5. Plus précisément, en fonctionnement, le fluide hydraulique circulant à travers le circuit hydraulique constitué par la deuxième ligne d'alimentation 7 et par le deuxième réservoir hydraulique 8, se réchauffe plus rapidement que le fluide hydraulique circulant à travers le circuit hydraulique formé par la première ligne d'alimentation 4 et le premier réservoir hydraulique 5.
Pour ce faire, la deuxième ligne d'alimentation 7 peut être plus courte que la première ligne d'alimentation 4, en ce sens que la distance parcourue par un particule de fluide hydraulique entre l'orifice de refoulement 200, le cas échéant en passant par le second réservoir hydraulique 8, et l'orifice d'admission 202 est inférieure à la distance parcourue par une particule de fluide hydraulique entre le premier réservoir hydraulique 5 et l'orifice d'admission 202. Les pertes de charges sont donc plus faibles lors de la circulation du fluide hydraulique à travers le circuit hydraulique constitué par la deuxième ligne d'alimentation 7 et par le deuxième réservoir hydraulique 8, que lors de la circulation du fluide hydraulique à travers le circuit hydraulique formé par la première ligne d'alimentation 4 et le premier réservoir hydraulique 5. Le volume de fluide hydraulique étant plus faible, le réchauffage du fluide hydraulique prend moins de temps.
Par ailleurs, le deuxième réservoir hydraulique 8 peut présenter des dimensions inférieures au premier réservoir hydraulique 5. Ainsi, en fonctionnement, le fluide hydraulique stocké au sein du deuxième réservoir hydraulique 8 est renouvelé plus régulièrement que le fluide hydraulique stocké au sein du premier réservoir hydraulique 5. Par conséquent, le fluide hydraulique circulant sur la deuxième ligne d'alimentation 7 et stocké au sein du deuxième réservoir hydraulique 8, est soumis plus régulièrement au passage à travers des éléments mobiles internes de la pompe de gavage 2, que le fluide hydraulique stocké au sein du premier réservoir hydraulique 5. De fait, le fluide hydraulique circulant sur la deuxième ligne d'alimentation 7 et stocké au sein du deuxième réservoir hydraulique 8, se réchauffe plus rapidement que le fluide hydraulique stocké au sein du premier réservoir hydraulique 5. Le volume de fluide hydraulique étant plus faible, le réchauffage du fluide hydraulique prend moins de temps.
En complément ou en variante, la deuxième ligne d'alimentation 7 peut être pourvue d'une restriction hydraulique (non représentée), par exemple réglable ou désactivable, permettant le réchauffement du fluide hydraulique circulant sur la deuxième ligne d'alimentation 7, lors de son passage dans ladite restriction hydraulique.
La présence d'une deuxième ligne d'alimentation 7 et d'un deuxième réservoir hydraulique 8, permet donc avantageusement de faire circuler un fluide hydraulique au sein d'un circuit d'alimentation de la pompe de gavage 2 qui soit plus court, ce qui permet de réchauffer plus rapidement le fluide hydraulique. Les phénomènes de cavitation de la pompe de gavage 2 lors de démarrage à froid du dispositif de transmission hydraulique sont ainsi avantageusement réduits.

L'ensemble 1 peut comprendre en outre une pompe principale 11 configurée pour alimenter en fluide hydraulique un circuit hydraulique de transmission 14, la pompe principale 11 et la pompe de gavage 2 pouvant partager le même carter. Contrairement à la pompe de gavage 2, la pompe principale 11 fonctionne donc généralement en circuit fermé.

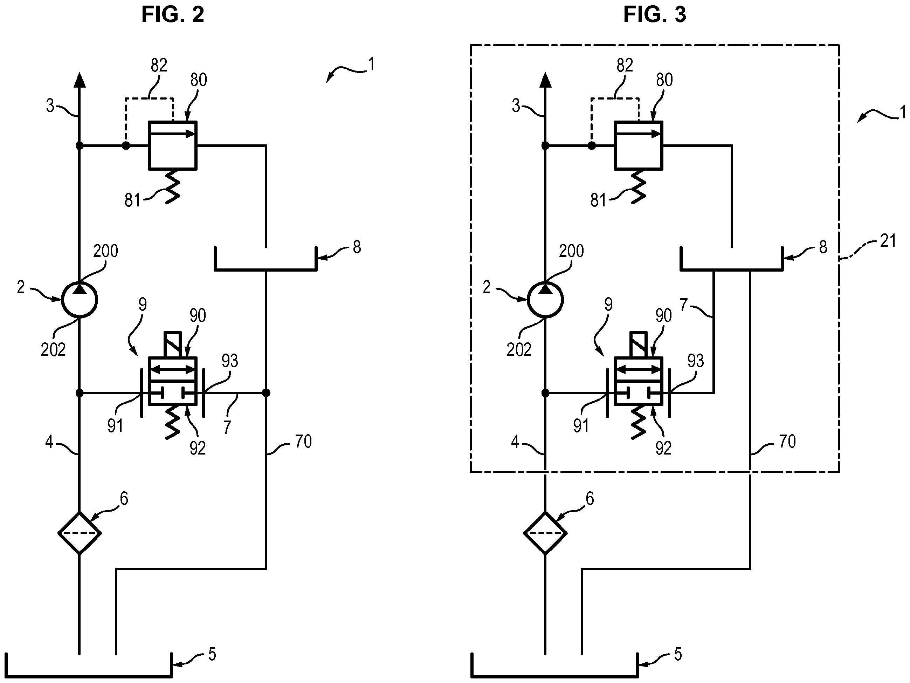

En référence aux figures 2 à 5, dans un mode de réalisation privilégié, le deuxième réservoir de fluide hydraulique 8 est un carter 8 de la pompe de gavage 2 et, le cas échéant, de l'ensemble pompe principale 11 et pompe de gavage 2.

Comme visible sur les figures, l'ensemble 1 comprend un limiteur de pression 80 agencé sur la deuxième ligne d'alimentation 7. Le limiteur de pression 80 est configuré pour délester le conduit 3 lorsque la pression en fluide y est supérieure à celle exercée par un élément de rappel 81, par exemple un ressort taré, c'est-à-dire typiquement une pression comprise entre 10 à 30 bars, par exemple 15 bars. Le limiteur de pression 80 autorise donc le passage de fluide hydraulique depuis le conduit 3 du dispositif de transmission vers le carter 8 de la pompe de gavage 2. La présence du limiteur de pression 80 permet donc de maintenir et de limiter la pression au sein du conduit 3, même si la pompe de gavage 2 fonctionne en continu. La présence du limiteur de pression 80 permet ainsi d'alimenter le carter 8 de pompe de gavage 2 en fluide hydraulique ayant déjà subi un échauffement dû à son passage dans éléments tournants de la pompe de gavage 2 et dans le limiteur de pression 80 lui-même. Le carter 8 de la pompe de gavage 2 étant de dimension réduite, et subissant lui-même un échauffement lors du fonctionnement de la pompe de gavage 2, le fluide hydraulique circulant au sein du carter 8 s'échauffe rapidement.

Alternativement, la deuxième ligne d'alimentation 7 peut également être directement liée fluidiquement à l'orifice de refoulement 200 de la pompe de gavage 2, par exemple en étant raccordée fluidiquement à la pompe de gavage 2 en amont du raccordement avec le limiteur de pression 80.

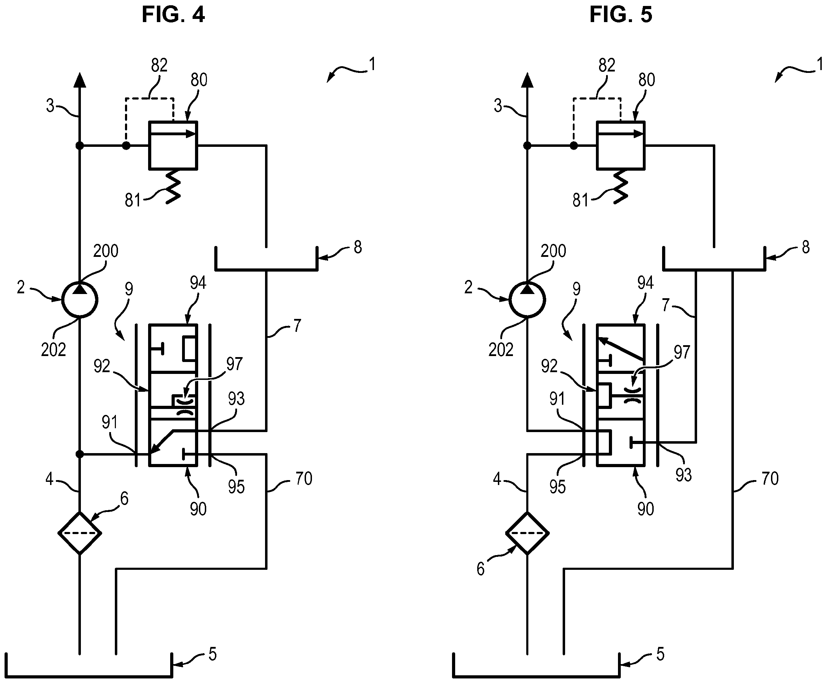

Comme également visible sur les figures, la deuxième ligne d'alimentation 7 comprend alors une extrémité reliée au carter 8 de la pompe de gavage 2.
En référence aux figures 2 et 4, le carter 8 de la pompe de gavage 2 comprenant généralement un drain 70 relié au premier réservoir 5, la deuxième ligne d'alimentation 7 est, dans un premier mode de réalisation, reliée fluidiquement au drain de carter 70. Un tel drain 70, relié au premier réservoir de fluide hydraulique 5, permet d'éviter une surpression à l'intérieur du carter 8, en autorisant l'écoulement de fluide hydraulique en excès depuis le carter 8 vers le premier réservoir hydraulique 5.

En référence aux figures 3 et 5, la deuxième ligne d'alimentation 7 est, dans un second mode de réalisation, indépendante du drain 70 de carter 8.

Dans un mode de réalisation alternatif (non représenté), le deuxième réservoir de fluide hydraulique 8 est accolé au premier réservoir hydraulique 5, et possède des dimensions inférieures au premier réservoir hydraulique 5. Typiquement, le premier réservoir hydraulique 5 possède un volume de 40 litres, tandis que le second réservoir hydraulique 8 possède un volume de 2 litres. Par exemple, le premier réservoir hydraulique 5 et le deuxième réservoir hydraulique 8 constituent deux chambres 5, 8 d'un réservoir commun, séparé par une cloison autorisant la communication fluidique entre les deux chambres 5, 8.

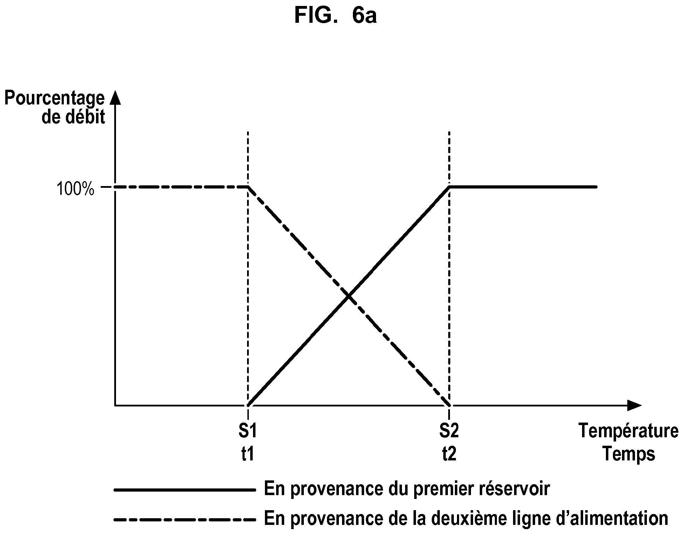

De manière également privilégiée, comme visible sur les figures 2 à 5, l'ensemble 1 comprend des moyens de sélection 9 configurés pour permettre l'alimentation de la pompe de gavage 2 via son orifice d'alimentation 202 par :
- la première ligne d'alimentation 4, ou
- la deuxième ligne d'alimentation 7, ou
- à la fois la première ligne 4 et la deuxième ligne 7 d'alimentation.
Grâce à ces moyens de sélection 9, la pompe de gavage 2 peut fonctionner sur des plages de température plus importantes. En effet, en référence à la figure 6a, à de faibles températures, les moyens de sélection 9 n'autorisent l'alimentation de la pompe de gavage 2 qu'au moyen de la deuxième ligne d'alimentation 7, au sein de laquelle le fluide se réchauffe plus rapidement, grâce au fait que le circuit d'alimentation est plus court, le volume de fluide hydraulique circulant étant plus faible, comme précédemment décrit. La température du fluide hydraulique, et du dispositif de transmission hydraulique 10 de manière générale, augmentant progressivement, les moyens de sélection 9 autorisent l'alimentation de la pompe de gavage à la fois à partir de la première ligne 4 et de la deuxième ligne d'alimentation 7, par exemple dès que la température du fluide dépasse un premier seuil S1 de température, le premier seuil S1 étant par exemple compris entre 0°C et 15°C, et valant de préférence de l'ordre de 10°C. Ceci permet d'intégrer petit à petit au circuit ouvert, du fluide hydraulique plus froid, en provenance du premier réservoir hydraulique 5. Enfin, à des températures de fonctionnement nominales, par exemple dès que la température du fluide dépasse un second seuil S2, supérieur au premier seuil S1, par exemple compris entre 10°C et 40°C, et valant de préférence de l'ordre de 30°C, les moyens de sélection 9 autorisent l'alimentation de la pompe de gavage 2 uniquement à partir de la première ligne d'alimentation 4. Entre le premier seuil S1 et le deuxième seuil S2, l'alimentation de la pompe de gavage 2 passe progressivement de 100% en provenance de la deuxième ligne d'alimentation 7, à 100% à partir de la première ligne d'alimentation 4, c'est-à-dire du premier réservoir 5. La cylindrée de la pompe de gavage 2 étant généralement fixe, le débit de fluide alimentation la pompe de gavage 2 est constant, à vitesse de rotation constante. En revanche, le pourcentage de ce débit de fluide en provenance de la première ligne d'alimentation 4 et/ou de la deuxième ligne d'alimentation 7 évolue continûment au fur et à mesure de l'évolution de la température du fluide hydraulique. Ce fonctionnement séquencé de l'ensemble 1 permet une avantageuse réduction des phénomènes de cavitation de la pompe de gavage 2 à froid. Par ailleurs, bien que la figure 6a illustre un fonctionnement séquencé selon une évolution linéaire, tout autre forme d'évolution du pourcentage de débit de fluide peut être réalisée, dans le cadre de l'invention, tant que la somme du pourcentage de débit de fluide en provenance du premier réservoir 5 et du pourcentage de débit de fluide en provenance de la deuxième ligne d'alimentation 7, est égale à 100%.

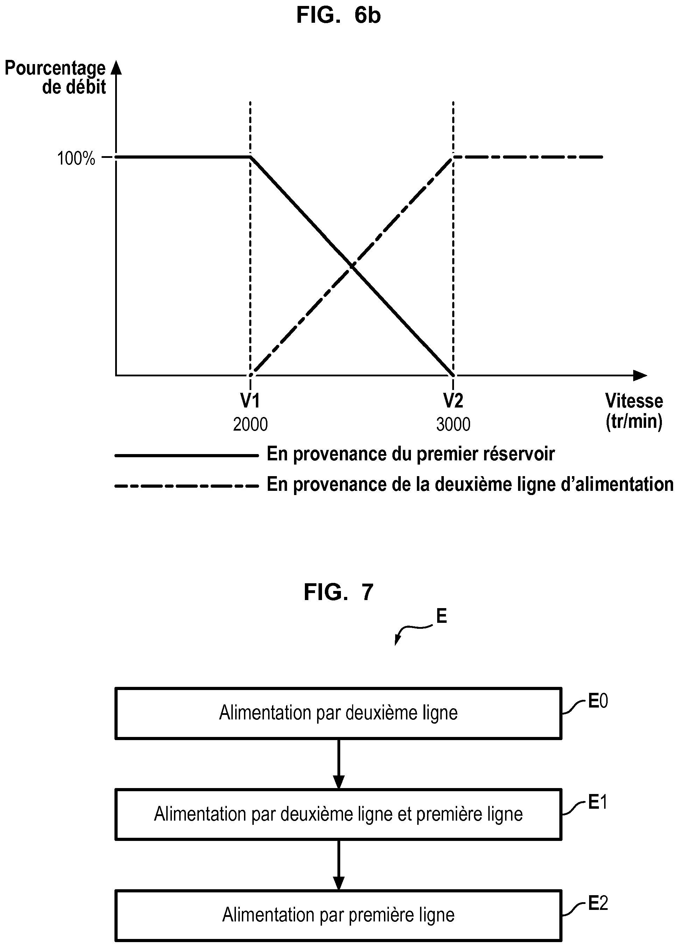

Avantageusement, les moyens de sélection 9 sont pilotables, en vue d'optimiser le fonctionnement séquencé précédemment décrit.
Dans un premier mode de réalisation, les moyens de sélection 9 sont pilotés par des moyens thermosensibles, de sorte que la position des moyens de sélection 9 contrôlant l'alimentation en fluide hydraulique de l'orifice d'alimentation 202, comme il sera décrit par la suite, dépend de la température du fluide hydraulique.
Dans un second mode de réalisation, les moyens de sélection 9 sont pilotés électriquement, par exemple par un automate (non représenté) programmé pour mettre en oeuvre les moyens de sélection 9 selon un fonctionnement séquencé. Avantageusement, le pilotage électrique dépend d'une information relative à la température du fluide hydraulique, ladite information pouvant avoir été reçue, puis transmise par l'intermédiaire d'un capteur de température (non représenté) du fluide hydraulique configuré à cet effet. Alternativement, le pilotage électrique dépend d'un signal temporel séquencé, par exemple préprogrammé. En effet, les temps de chauffe d'un fluide hydraulique donné en fonctionnement, sont généralement bien connus des constructeurs. En référence à la figure 6a, il peut donc être moins coûteux, et tout aussi efficace, de piloter le fonctionnement des moyens de sélection 9 suivant une dynamique temporelle prédéterminée, par exemple en alimentation la pompe de gavage 2 par l'intermédiaire de la deuxième ligne d'alimentation 7 durant une certaine période t1, par exemple de l'ordre de dix minutes, puis par l'intermédiaire des deux lignes d'alimentation 4, 7 durant une certaine période t2 - t1, par exemple de l'ordre trois minutes, avant de sélectionner l'alimentation par la seule première ligne d'alimentation 4 pour le reste du fonctionnement (à partir de l'instant t2). Enfin, en référence à la figure 6b, dans une autre alternative, le pilotage électrique dépend d'une information relative à la vitesse de la pompe de gavage 2, ladite information pouvant avoir été reçue, puis transmise par l'intermédiaire d'un capteur de vitesse configuré à cet effet. Les phénomènes de cavitation sont en effet liés au dimensionnement relatif des circuits d'alimentation 4,7. Par conséquent, pour un débit de fluide plus faible, le même ensemble 1 sera moins le siège de cavitation. Il peut donc être nécessaire de piloter les moyens de sélection 9 pour privilégier à nouveau le circuit court, alors que l'évolution de la température avait permis de commencer à privilégier le circuit long. Plus précisément, comme visible sur la figure 6b, pour des vitesses de rotation de la pompe de gavage 2 inférieures à un premier seuil V1, valant par exemple 2000 tours/minute, les moyens de sélection 9 autorisent l'alimentation de la pompe de gavage 2 uniquement à partir de la première ligne d'alimentation 4, c'est-à-dire du premier réservoir 5, car les risques de cavitation de la pompe de gavage 2 à ces vitesses sont minimes. Puis, entre le premier seuil V1 et un deuxième seuil V2, supérieur au premier seuil V1, valant par exemple 3000 tours/minute, l'alimentation de la pompe de gavage 2 passe progressivement de 100% en provenance du premier réservoir 5, à 100% à partir de la deuxième ligne d'alimentation 7. Au-delà du second seuil V2, les moyens de sélection 9 n'autorisent l'alimentation de la pompe de gavage 2 qu'au moyen de la deuxième ligne d'alimentation 7, car les risques de cavitation sont très élevés.
Le pilotage des moyens de sélection 9 peut donc, dans un mode de réalisation particulier, être réalisé par compromis entre la température du fluide hydraulique et la vitesse de rotation de la pompe de gavage 2, c'est-à-dire de manière hybride.

Différents modes de réalisation des moyens de sélection 9 vont à présent être décrits, en référence aux figures. Chacun de ces moyens de sélection 9 comprend un distributeur hydraulique 9 comprenant une pluralité d'orifices 91, 93, 95, et une pluralité de positions 90, 92, 94 dans lesquelles il relie fluidiquement tout ou partie des orifices 91, 93, 95 entre eux. Le passage d'une position à l'autre détermine les mises en communications alternatives précédemment décrites. Le passage d'une position à une autre est donc également piloté par tous moyens connus, tels que ceux précédemment décrits. La structure et le dimensionnement de tels distributeurs 9 étant bien connus de l'homme de l'art, ils ne seront pas plus détaillés ici.

Avantageusement, comme visible sur la figure 3, les moyens de sélection 9 sont en outre directement intégrés au bloc 21 formé de la pompe de gavage 2 et, le cas échéant, de la pompe principale 11 partageant le même carter 8. La ligne d'alimentation est 7 est alors distincte du drain 70 du premier réservoir 5. A titre d'alternative, l'intégration au bloc 21 peut également être mis en oeuvre dans les modes de réalisations illustrés sur les figures 2, 4 et 5.

En variante, comme illustré sur la figure 2, la deuxième ligne d'alimentation 7 et le drain 70 peuvent être confondues.

En référence aux figures 2 à 5, les moyens de sélection comprennent un distributeur hydraulique proportionnel 9. De tels distributeurs sont connus, et comprennent généralement un corps fixe définissant une cavité au sein de laquelle un tiroir est mis en mouvement, par exemple en translation. Le mouvement du tiroir est pilotable, par exemple tel que précédemment décrit, et permet alternativement de relier et/ou d'isoler entre eux des orifices du distributeur 9. En outre, le placement du tiroir à l'intérieur de la cavité de corps fixe définit les différentes positions du distributeur 9, et notamment une infinité de positions intermédiaires correspondant à une répartition particulière des débits d'alimentations.

En référence aux figures 2 et 3, dans un premier mode de réalisation, les moyens de sélection 9 comprennent un distributeur 9 à deux orifices 91, 93 et au moins deux positions 90, 92. Le distributeur 9 est alors un distributeur proportionnel, c'est-à-dire, qu'il existe entre ses deux positions extrêmes 90, 92 une infinité/pluralité de positions correspondant à une répartition particulière des débits (de 0-100% à 100-0 %), et comprend :
- un premier orifice 91 relié fluidiquement à l'orifice d'admission 202, et
- un deuxième orifice 93 relié fluidiquement à la deuxième ligne d'alimentation 7.
Le distributeur 9 comprend en outre :
- une position extrême passante 90 dans lequel il relie fluidiquement le premier orifice 91 au deuxième orifice 92, et
- une position extrême bloquante 92 dans lequel il isole fluidiquement le premier orifice 91 du deuxième orifice 93.
Le passage de la position passante 90 à la position bloquante 92 est progressif, de façon à permettre à l'ensemble 1 de fonctionner de manière séquencée, comme précédemment décrit en référence à la figure 6. En effet, le distributeur 9 permet de passer d'une alimentation de la pompe de gavage 2 par l'intermédiaire de la deuxième ligne d'alimentation 7 et, dans une moindre mesure, de la première ligne d'alimentation 4, à une alimentation de la pompe de gavage 2 par l'intermédiaire de la première ligne d'alimentation 4 uniquement. En effet, la pompe de gavage 2 ayant une cylindrée donnée, le fluide hydraulique circulant à travers un circuit plus court et avec moins de pertes de charge (typiquement la deuxième ligne d'alimentation 7) alimente la pompe de gavage 2 de manière privilégiée par rapport au fluide hydraulique circulant à travers un circuit plus long et avec plus de pertes de charge (typiquement la première ligne d'alimentation 4). En outre, la deuxième ligne d'alimentation 7 pouvant être reliée fluidiquement à la ligne de drain 70 et/ou au deuxième réservoir 8, elle peut-être à une pression supérieure à celle de la première ligne d'alimentation 4, reliée fluidiquement au premier réservoir 5. Ici, même si première ligne d'alimentation 4 et deuxième ligne d'alimentation 7 sont toutes deux reliées fluidiquement à l'orifice d'admission 202 en position passante 90, c'est la deuxième ligne d'alimentation 7 qui alimente la pompe de gavage 7 de manière privilégiée, réduisant ainsi le phénomène de cavitation à froid, comme précédemment décrit.
Ainsi, grâce au distributeur 9 proportionnel, à deux orifices et au moins deux positions, le pourcentage de débit de fluide alimentant la pompe de gavage 2, en provenance de la deuxième ligne d'alimentation 7, diminue progressivement au profit d'un pourcentage grandissant de débit de fluide en provenance de la première ligne d'alimentation 4.

En référence à la figure 4, dans un second mode de réalisation, les moyens de sélection 9 comprennent un distributeur 9 à trois orifices 91, 93, 95 et au moins trois positions 90, 92, 94. Le distributeur 9 est également un distributeur proportionnel, c'est-à-dire, qu'il existe entre chacune de ses positions 90, 92, 94 une infinité/pluralité de positions correspondant à une répartition particulière des débits, et comprend :
- un premier orifice 91 relié fluidiquement à l'orifice d'admission 202,
- un deuxième orifice 93 relié fluidiquement à la deuxième ligne d'alimentation 7, et
- un troisième orifice 95 relié fluidiquement au premier réservoir 5.
Le distributeur 9 comprend en outre :
- une première position extrême 90 dans lequel il relie fluidiquement le premier orifice 91 au deuxième orifice 93, et isole le troisième orifice 95,
- une deuxième position intermédiaire 92 dans lequel il relie fluidiquement le premier orifice 91 et le deuxième orifice 93, au troisième orifice 95, par l'intermédiaire d'une restriction hydraulique 97 dont la section (résistance hydraulique) varie en fonction de la position du tiroir du distributeur 9, et
- une troisième position extrême 94 dans lequel :
   ∘ il relie fluidiquement le deuxième orifice 93 et le troisième orifice 95, et
   ∘ il isole fluidiquement le premier orifice 91.
Le passage de la première position 90 à la deuxième position 92 permet de passer d'une alimentation de la pompe de gavage 2 par l'intermédiaire de la deuxième ligne d'alimentation 7 et, à une alimentation de la pompe de gavage 2 par l'intermédiaire de la première ligne d'alimentation 4 et, simultanément de la deuxième ligne d'alimentation 7. En outre, lors du déplacement du tiroir du distributeur 9 de la première position 90 à la deuxième position 92, puis de la deuxième position 92 à la troisième position 94, la résistance hydraulique de la restriction hydraulique 97 diminue progressivement. Ainsi la restriction hydraulique 97, qui peut être un gicleur 97, autorise la circulation d'un débit croissant de fluide entre la deuxième ligne d'alimentation 7 et le drain 70. Enfin, le passage à la troisième position 95 permet de passer à une alimentation de la pompe de gavage 2 par l'intermédiaire de la première ligne d'alimentation 4 uniquement. De la même manière que dans le premier mode de réalisation, la cylindrée de la pompe de gavage 2 étant fixe, la présence de la restriction hydraulique 97 permet, en fonctionnement, de contrôler le débit en provenance de chacune des deux lignes d'alimentation 4 et 7. Grâce au distributeur 9 proportionnel, à trois orifices et au moins trois positions, le pourcentage de débit de fluide, alimentant la pompe de gavage 2, en provenance de la deuxième ligne d'alimentation 7, diminue progressivement au profit d'un pourcentage grandissant de débit de fluide en provenance de la première ligne d'alimentation 4. Le fonctionnement séquencé de l'ensemble de gavage 1, décrit précédemment en référence à la figure 6, est donc assuré.

En référence à la figure 5, dans un troisième mode de réalisation, les moyens de sélection 9 comprennent un distributeur 9 à trois orifices 91, 93, 95 et au moins trois positions 90, 92, 95. Le distributeur 9 est également un distributeur proportionnel, c'est-à-dire, qu'il existe entre chacune de ses positions 90, 92, 94 une infinité/pluralité de positions correspondant à une répartition particulière des débits, et comprend :
- un premier orifice 91 relié fluidiquement à l'orifice d'admission 202,
- un deuxième orifice 93 relié fluidiquement à la deuxième ligne d'alimentation 7, et
- un troisième orifice 95 relié fluidiquement à la première ligne d'alimentation 4.
Le distributeur 9 comprend en outre :
- une première position extrême 90 dans lequel :
   ∘ il relie fluidiquement le premier orifice 91 au troisième orifice 95, et
   ∘ il isole fluidiquement le deuxième orifice 93,
- une deuxième position intermédiaire 92 dans lequel il relie fluidiquement le deuxième orifice 93 au premier orifice 91 et au troisième orifice 95, par l'intermédiaire d'une restriction hydraulique 97 dont la section (résistance hydraulique) varie en fonction de la position du tiroir du distributeur 9, et
- une troisième position extrême 94 dans lequel :
   ∘ il relie fluidiquement le premier orifice 91 et le deuxième orifice 93, et
   ∘ il isole fluidiquement le troisième orifice 95.
Le passage de la première position 90 à la deuxième position 92 permet de passer d'une alimentation de la pompe de gavage 2 par l'intermédiaire de la première ligne d'alimentation 4 uniquement, à une alimentation de la pompe de gavage par l'intermédiaire de la première ligne d'alimentation 4 et, de la deuxième ligne d'alimentation 7. En outre, lors du déplacement du tiroir du distributeur 9 de la première position 90 à la deuxième position 92, puis de la deuxième position 92 à la troisième position 94, la résistance hydraulique de la restriction hydraulique 97 diminue progressivement. Ainsi la restriction hydraulique 97, qui peut être un gicleur 97, autorise la circulation d'un débit décroissant de fluide entre la deuxième ligne d'alimentation 7 et la pompe de gavage 2. Enfin, le passage à la troisième position 94 permet de passer à une alimentation de la pompe de gavage 2 par l'intermédiaire de la deuxième ligne d'alimentation 7 uniquement. Grâce au distributeur 9 proportionnel, à trois orifices et au moins trois positions, le pourcentage de débit de fluide, alimentant la pompe de gavage 2, en provenance de la deuxième ligne d'alimentation 7, diminue progressivement au profit d'un pourcentage grandissant de débit de fluide en provenance de la première ligne d'alimentation 4. Le fonctionnement séquencé de l'ensemble de gavage 1, décrit précédemment en référence à la figure 6, est donc assuré.

Dans les différents modes de réalisation précédemment décrits, le fonctionnement spécifique des distributeurs 9 autorise une transition continue et progressive entre les différentes positions 90, 92, 94 de distributeur 9. Ceci assure une alimentation continue de la pompe de gavage 2, quelle que soit la température du fluide hydraulique, sur une plage de température de fonctionnement. En outre, le distributeur 9 autorise un fonctionnement séquencé de l'ensemble de gavage 1, comme précédemment décrit en référence aux figures 6a et 6b.

En tout état de cause, le mode de fonctionnement nominal de l'ensemble de gavage 1 implique une alimentation de la pompe de gavage 2 exclusivement grâce au fluide au provenance du premier réservoir 5. En effet, une fois le fluide hydraulique suffisamment chaud, il est possible de profiter de la totalité du volume offert par le premier réservoir 5, pour maîtriser la température dans le circuit fermé. En outre, seul le fluide hydraulique en provenance du premier réservoir 5 circule à travers le dispositif de filtration 6 (filtration, dégazage, etc.). Par conséquent, le fonctionnement en circuit court ne peut être autorisé que temporairement.

Un tel ensemble 1 peut par exemple être mis en oeuvre au sein de véhicules comprenant un dispositif de transmission hydraulique 10, notamment un dispositif d'assistance hydraulique d'essieu ou de roues non moteur. De manière privilégiée un tel ensemble 1 est disposé au sein de véhicules utilitaires de type poids lourds, de véhicules automobiles, d'engins de chantier ou de véhicules agricoles.

Un procédé E de gestion de l'alimentation d'un ensemble de gavage 1 de dispositif de transmission hydraulique 10 comprenant un ensemble 1 selon l'un au moins des modes de réalisation précédemment décrits, va à présent être exposé plus en détails, en référence à la figure 7.

Un tel procédé E permet de rendre le dispositif de transmission hydraulique 10 opérationnel au sein d'une plage de température plus large que dans l'art antérieur, notamment lors d'une situation de démarrage en condition froide. Pour ce faire, le procédé E comprend une première étape E0 d'alimentation de la pompe de gavage 2 par l'intermédiaire de la deuxième ligne d'alimentation 7 si la température du fluide hydraulique est inférieure à un premier seuil S1. Lors d'une seconde étape E1 la pompe de gavage 2 est alimentée par l'intermédiaire de la première ligne 4 et de la deuxième ligne 7 d'alimentation, si la température du fluide hydraulique est comprise entre un premier seuil S1 et un deuxième seuil S2, le deuxième seuil S2 étant supérieur au premier seuil S1. En outre, le pourcentage de débit de fluide en provenance de la deuxième d'alimentation 7 évolue continument entre 100% et 0%, comme visible sur la figure 6a, au fur et à mesure de l'évolution de la température de de fluide hydraulique entre le premier seuil de température S1, et le deuxième seuil de température S2, ou si l'ensemble fonctionne entre le premier instant t1, et le deuxième instant t2. Lors d'une dernière étape E2, la pompe de gavage 2 est alimentée par l'intermédiaire de la première ligne d'alimentation 4 si la température du fluide hydraulique est supérieure au deuxième seuil S2, ou après l'instant t2. Comme on l'aura compris, en fonctionnement, les trois étapes E0, E1, E2 du procédé E se succèdent dans le temps, de sorte à ce que la pompe de gavage 2 soit alimentée en permanence, et de manière continue.

Le premier seuil S1 et le deuxième seuil S2 peuvent avoir été reçus et enregistrés à l'avance, et peuvent également dépendre du fluide hydraulique, de son état d'usure ou des caractéristiques de la pompe de gavage 2 et/ou de la transmission hydraulique de manière générale.

L'alimentation de la pompe de gavage 2, et son activation subséquente, permettent de débiter le fluide hydraulique au sein du conduit 3 de transmission hydraulique afin d'y établir une pression minimale, et de la maintenir, en vue notamment de l'activation de l'assistance hydraulique.

## Revendications

1. Ensemble de gavage (1) pour dispositif de transmission hydraulique (10) comprenant :
• une pompe de gavage (2) configurée pour établir, et maintenir, une pression de fluide minimale dans un conduit (3) du dispositif de transmission hydraulique (10), ladite pompe de gavage (2) comprenant :
∘ un orifice de refoulement (200) relié audit conduit (3), et
∘ un orifice d'admission (202), et
• une première ligne d'alimentation (4) reliée d'une part à un premier réservoir (5) de fluide d'hydraulique, et d'autre part à l'orifice d'admission (202),
• une deuxième ligne d'alimentation (7) reliée d'une part à l'orifice de refoulement (200), et d'autre part à l'orifice d'admission (202), et
• un deuxième réservoir (8) agencé sur la deuxième ligne d'alimentation (7).

2. Ensemble (1) selon la revendication 1, comprenant un limiteur de pression (80) agencé sur la deuxième ligne d'alimentation (7).

3. Ensemble (1) selon l'une des revendications 1 et 2, dans lequel le deuxième réservoir (8) de fluide hydraulique est un carter (8) de la pompe de gavage (2).

4. Ensemble (1) selon l'une des revendications 1 à 3, comprenant des moyens de sélection (9) configurés pour permettre l'alimentation de la pompe de gavage (2) via son orifice d'alimentation (202) par :
• la première ligne d'alimentation (4), ou
• la deuxième ligne d'alimentation (7), ou
• à la fois la première ligne (4) et la deuxième ligne d'alimentation (7).

5. Ensemble (1) selon la revendication 4, dans lequel les moyens de sélection (9) sont pilotés par des moyens thermosensibles, de sorte que la position des moyens de sélection (9) contrôlant l'alimentation en fluide hydraulique de l'orifice d'alimentation (202) dépend de la température du fluide hydraulique.

6. Ensemble (1) selon la revendication 4, dans lequel les moyens de sélection (9) sont pilotés électriquement.

7. Ensemble (1) selon la revendication 6, dans lequel le pilotage électrique dépend d'une information relative à la température du fluide hydraulique.

8. Ensemble (1) selon l'une des revendications 6 et 7, dans lequel le pilotage électrique dépend d'une information relative à la vitesse de la pompe de gavage (2).

9. Ensemble (1) selon l'une des revendications 4 à 8, dans lequel les moyens de sélections (9) comprennent un distributeur proportionnel (9), à deux orifices (91, 93) et au moins deux positions (90, 92) comprenant :
• un premier orifice (91) relié à l'orifice d'admission (202), et
• un deuxième orifice (93) relié à la deuxième ligne d'alimentation (7),
le distributeur (9) comprenant en outre :
• une position extrême passante (90) dans lequel il relie le premier orifice (91) au deuxième orifice (93), et
• une position extrême bloquante (92) dans lequel il isole le premier orifice (91) du deuxième orifice (93).

10. Ensemble (1) selon l'une des revendications 4 à 8, dans lequel les moyens de sélection (9) comprennent un distributeur proportionnel (9), à trois orifices (91, 93, 95) et au moins trois positions (90, 92, 94) comprenant :
• un premier orifice (91) relié à l'orifice d'admission (202),
• un deuxième orifice (93) relié à la deuxième ligne d'alimentation (7), et
• un troisième orifice (95) relié au premier réservoir (5),
le distributeur (9) comprenant en outre :
• une première position extrême (90) dans lequel il relie le premier orifice (91) au deuxième orifice (93), et isole le troisième orifice (95),
• une deuxième position intermédiaire (92) dans lequel il relie le deuxième orifice (93) et le premier orifice (91), au troisième orifice (95), par l'intermédiaire d'une restriction hydraulique, et
• une troisième position extrême (94) dans lequel :
∘ il relie le deuxième orifice (93) et le troisième orifice (95), et
∘ il isole le premier orifice (91).

11. Ensemble (1) selon l'une des revendications 4 à 8, dans lequel les moyens de sélection (9) comprennent un distributeur proportionnel (9), à trois orifices (91, 93, 95) et au moins trois positions (90, 92, 94) comprenant :
• un premier orifice (91) relié à l'orifice d'admission (202),
• un deuxième orifice (93) reliée à la deuxième ligne d'alimentation (7), et
• un troisième orifice (95) relié à la première ligne d'alimentation (4),
le distributeur (9) comprenant en outre :
• une première position extrême (90) dans lequel :
∘ il relie le premier orifice (91) au troisième orifice (95), et
∘ il isole le deuxième orifice (93),
• une deuxième position intermédiaire (92) dans lequel il relie le deuxième orifice (93) au premier orifice (91) et au troisième orifice (95), par l'intermédiaire d'une restriction hydraulique, et
• une troisième position extrême (94) dans lequel :
∘ il relie le premier orifice (91) et le deuxième orifice (93), et
∘ il isole le troisième orifice (95).

12. Ensemble (1) selon l'une des revendications 1 à 11, comprenant en outre une pompe principale (11) configurée pour alimenter en fluide hydraulique un circuit hydraulique de transmission (14), la pompe principale (11) et la pompe de gavage (2) partageant le même carter (8).

13. Véhicule comprenant un ensemble (1) selon l'une des revendications 1 à 12.

14. Procédé (E) de gestion de l'alimentation d'un ensemble de gavage (1) d'un dispositif de transmission hydraulique (10) comprenant un ensemble (1) selon l'une des revendications 1 à 12, le procédé (E) comprenant les étapes de :
• alimentation (E0) de la pompe de gavage (2) par l'intermédiaire de la deuxième ligne d'alimentation (7) si la température de fluide hydraulique est inférieure à un premier seuil (S1),
• alimentation (E1) de la pompe de gavage (2) par l'intermédiaire de la première ligne (4) et de la deuxième ligne d'alimentation (7) si la température de fluide hydraulique est comprise entre le premier seuil (S1) et un deuxième seuil (S2), le pourcentage de débit de fluide hydraulique en provenance de la deuxième ligne (7) évoluant continûment entre 100% et 0%, au fur et à mesure de l'évolution de la température du fluide hydraulique entre le premier seuil de température (S1) et le deuxième seuil de température (S2), et
• alimentation (E2) de la pompe de gavage (2) par l'intermédiaire de la première ligne d'alimentation (4) si la température de fluide hydraulique est supérieure au deuxième seuil (S2).

## Patentansprüche

1. Ladebaugruppe (1) für hydraulische Kraftübertragungsvorrichtungen (10), die umfasst:
• eine Ladepumpe (2), die dazu ausgestaltet ist, einen Mindestfluiddruck in einer Leitung (3) der hydraulischen Kraftübertragungsvorrichtung (10) aufzubauen und aufrechtzuerhalten, wobei die Ladepumpe (2) umfasst:
∘ eine Auslassöffnung (200), die mit der Leitung (3) verbunden ist, und
∘ eine Einlassöffnung (202), und
• eine erste Versorgungsleitung (4), die auf der einen Seite mit einem ersten Hydraulikfluidbehälter (5) und auf der anderen Seite mit der Einlassöffnung (202) verbunden ist,
• eine zweite Versorgungsleitung (7), die auf der einen Seite mit der Auslassöffnung (200) und auf der anderen Seite mit der Einlassöffnung (202) verbunden ist, und
• einen zweiten Behälter (8), der auf der zweiten Versorgungsleitung (7) angeordnet ist.

2. Baugruppe (1) nach Anspruch 1, die einen Druckbegrenzer (80) umfasst, der auf der zweiten Versorgungsleitung (7) angeordnet ist.

3. Baugruppe (1) nach einem der Ansprüche 1 und 2, wobei der zweite Hydraulikfluidbehälter (8) ein Gehäuse (8) der Ladepumpe (2) ist.

4. Baugruppe (1) nach einem der Ansprüche 1 bis 3, die ferner Auswahlmittel (9) umfasst, die dazu ausgestaltet sind, die Versorgung der Ladepumpe (2) über ihre Versorgungsöffnung (202) zu ermöglichen durch:
• die erste Versorgungsleitung (4) oder
• die zweite Versorgungsleitung (7) oder
• die erste Versorgungsleitung (4) und die zweite Versorgungsleitung (7) zugleich.

5. Baugruppe (1) nach Anspruch 4, wobei die Auswahlmittel (9) durch wärmeempfindliche Mittel gesteuert werden, derart dass die Position der Auswahlmittel (9), die die Versorgung der Versorgungsöffnung (202) mit Hydraulikfluid regeln, von der Temperatur des Hydraulikfluids abhängt.

6. Baugruppe (1) nach Anspruch 4, wobei die Auswahlmittel (9) elektrisch gesteuert werden.

7. Baugruppe (1) nach Anspruch 6, wobei die elektrische Steuerung von einer Information abhängt, die die Temperatur des Hydraulikfluids betrifft.

8. Baugruppe (1) nach einem der Ansprüche 6 und 7, wobei die elektrische Steuerung von einer Information abhängt, die die Geschwindigkeit der Ladepumpe (2) betrifft.

9. Baugruppe (1) nach einem der Ansprüche 4 bis 8, wobei die Auswahlmittel (9) ein Proportionalventil (9) mit zwei Öffnungen (91, 93) und mindestens zwei Positionen (90, 92) umfassen, das umfasst:
• eine erste Öffnung (91), die mit der Einlassöffnung (202) verbunden ist, und
• eine zweite Öffnung (93), die mit der zweiten Versorgungsleitung (7) verbunden ist, wobei das Ventil (9) ferner umfasst:
• eine Durchlassendposition (90), in der es die erste Öffnung (91) mit der zweiten Öffnung (93) verbindet, und
• eine Sperrendposition (92), in der es die erste Öffnung (91) von der zweiten Öffnung (93) trennt.

10. Baugruppe (1) nach einem der Ansprüche 4 bis 8, wobei die Auswahlmittel (9) ein Proportionalventil (9) mit drei Öffnungen (91, 93, 95) und mindestens drei Positionen (90, 92, 94) umfassen, das umfasst:
• eine erste Öffnung (91), die mit der Einlassöffnung (202) verbunden ist,
• eine zweite Öffnung (93), die mit der zweiten Versorgungsleitung (7) verbunden ist, und
• eine dritte Öffnung (95), die mit dem ersten Behälter (5) verbunden ist,
wobei das Ventil (9) ferner umfasst:
• eine erste, eine Endposition (90), in der es die erste Öffnung (91) und die zweite Öffnung (93) verbindet und die dritte Öffnung (95) trennt,
• eine zweite, eine Zwischenposition (92), in der es die zweite Öffnung (93) und die erste Öffnung (91) mit der dritten Öffnung (95) über eine hydraulische Drosselung verbindet, und
• eine dritte, eine Endposition (94), in der:
∘ es die zweite Öffnung (93) und die dritte Öffnung (95) verbindet und
∘ es die erste Öffnung (91) trennt.

11. Baugruppe (1) nach einem der Ansprüche 4 bis 8, wobei die Auswahlmittel (9) ein Proportionalventil (9) mit drei Öffnungen (91, 93, 95) und mindestens drei Positionen (90, 92, 94) umfassen, das umfasst:
• eine erste Öffnung (91), die mit der Einlassöffnung (202) verbunden ist,
• eine zweite Öffnung (93), die mit der zweiten Versorgungsleitung (7) verbunden ist, und
• eine dritte Öffnung (95), die mit der ersten Versorgungsleitung (4) verbunden ist,
wobei das Ventil (9) ferner umfasst:
• eine erste, eine Endposition (90), in der:
∘ es die erste Öffnung (91) mit der dritten Öffnung (95) verbindet, und
∘ es die zweite Öffnung (93) trennt,
• eine zweite, eine Zwischenposition (92), in der es die zweite Öffnung (93) mit der ersten Öffnung (91) und mit der dritten Öffnung (95) über eine hydraulische Drosselung verbindet, und
• eine dritte, eine Endposition (94), in der:
∘ es die erste Öffnung (91) mit der zweiten Öffnung (93) verbindet, und
∘ es die dritte Öffnung (95) isoliert.

12. Baugruppe (1) nach einem der Ansprüche 1 bis 11, die ferner eine Hauptpumpe (11) umfasst, die dazu ausgestaltet ist, einen hydraulischen Kraftübertragungskreis (14) mit Hydraulikfluid zu versorgen, wobei die Hauptpumpe (11) und die Ladepumpe (2) dasselbe Gehäuse (8) teilen.

13. Fahrzeug, das eine Baugruppe (1) nach einem der Ansprüche 1 bis 12 umfasst.

14. Verfahren (E) zur Verwaltung der Versorgung einer Ladebaugruppe (1) einer hydraulischen Kraftübertragungsvorrichtung (10), die eine Baugruppe (1) nach einem der Ansprüche 1 bis 12 umfasst, wobei das Verfahren (E) die folgenden Schritte umfasst:
• Versorgen (E0) der Ladepumpe (2) über die zweite Versorgungsleitung (7), wenn die Hydraulikfluidtemperatur unterhalb einer ersten Schwelle (S1) liegt,
• Versorgen (E1) der Ladepumpe (2) über die erste Versorgungsleitung (4) und die zweite Versorgungsleitung (7), wenn die Temperatur des Hydraulikfluids zwischen der ersten Schwelle (S1) und einer zweiten Schwelle (S2) liegt, wobei der Prozentsatz des Durchsatzes an Hydraulikfluid, das von der zweiten Leitung (7) stammt, sich nach und nach mit der Veränderung der Temperatur des Hydraulikfluids zwischen der ersten Temperaturschwelle (S1) und der zweiten Temperaturschwelle (S2) kontinuierlich zwischen 100 % und 0 % verändert, und
• Versorgen (E2) der Ladepumpe (2) über die erste Versorgungsleitung (4), wenn die Temperatur des Hydraulikfluids höher als die zweite Schwelle (S2) ist.

## Claims

1. A booster assembly (1) for a hydraulic transmission device (10) comprising:
• a booster pump (2) configured to establish, and maintain, a minimum fluid pressure in a conduit (3) of the hydraulic transmission device (10), said booster pump (2) comprising:
∘ a discharge port (200) connected to said conduit (3), and
∘ an intake port (202), and
• a first supply line (4) connected on the one hand to a first hydraulic fluid reservoir (5), and on the other hand to the intake port (202),
• a second supply line (7) connected on the one hand to the discharge port (200), and on the other hand to the intake port (202), and
• a second reservoir (8) arranged on the second supply line (7).

2. The assembly (1) according to claim 1, comprising a pressure limiter (80) arranged on the second supply line (7).

3. The assembly (1) according to any of claims 1 and 2, wherein the second hydraulic fluid reservoir (8) is a casing (8) of the booster pump (2).

4. The assembly (1) according to any of claims 1 to 3, comprising selection means (9) configured to allow the supply of the booster pump (2) via its supply port (202) by:
• the first supply line (4), or
• the second supply line (7), or
• both the first supply line (4) and the second supply line (7).

5. The assembly (1) according to claim 4, wherein the selection means (9) are controlled by heat-sensitive means, so that the position of the selection means (9) monitoring the supply with hydraulic fluid of the supply port (202) depends on the temperature of the hydraulic fluid.

6. The assembly (1) according to claim 4, wherein the selection means (9) are electrically controlled.

7. The assembly (1) according to claim 6, wherein the electrical control depends on information relating to the temperature of the hydraulic fluid.

8. The assembly (1) according to any of claims 6 and 7, wherein the electrical control depends on information relating to the speed of the booster pump (2) .

9. The assembly (1) according to any of claims 4 to 8, wherein the selection means (9) comprise a proportional directional valve (9), with two ports (91, 93) and at least two positions (90, 92) comprising:
• a first port (91) connected to the intake port (202), and
• a second port (93) connected to the second supply line (7), the directional valve (9) further comprising:
• an extreme conducting position (90) in which it connects the first port (91) to the second port (93), and
• an extreme blocking position (92) in which it isolates the first port (91) from the second port (93).

10. The assembly (1) according to any of claims 4 to 8, wherein the selection means (9) comprise a proportional directional valve (9), with three ports (91, 93, 95) and at least three positions (90, 92, 94) comprising:
• a first port (91) connected to the intake port (202),
• a second port (93) connected to the second supply line (7), and
• a third port (95) connected to the first reservoir (5),
the directional valve (9) further comprising:
• a first extreme position (90) in which it connects the first port (91) to the second port (93), and isolates the third port (95),
• a second intermediate position (92) in which it connects the second port (93) and the first port (91), to the third port (95), via a hydraulic restriction, and
• a third extreme position (94) in which:
∘ it connects the second port (93) and the third port (95), and
∘ it isolates the first port (91).

11. The assembly (1) according to any of claims 4 to 8, wherein the selection means (9) comprise a proportional directional valve (9), with three ports (91, 93, 95) and at least three positions (90, 92, 94) comprising:
• a first port (91) connected to the intake port (202),
• a second port (93) connected to the second supply line (7), and
• a third port (95) connected to the first supply line (4), the directional valve (9) further comprising:
• a first extreme position (90) in which:
∘ it connects the first port (91) to the third port (95), and
∘ it isolates the second port (93),
• a second intermediate position (92) in which it connects the second port (93) to the first port (91) and to the third port (95), via a hydraulic restriction, and
• a third extreme position (94) in which:
∘ it connects the first port (91) and the second port (93), and
∘ it isolates the third port (95).

12. The assembly (1) according to any of claims 1 to 11, further comprising a main pump (11) configured to supply a hydraulic transmission circuit (14) with hydraulic fluid, the main pump (11) and the booster pump (2) sharing the same casing (8).

13. A vehicle comprising an assembly (1) according to any of claims 1 to 12.

14. A method (E) for managing the supply of a booster assembly (1) of a hydraulic transmission device (10) comprising an assembly (1) according to any of claims 1 to 12, the method (E) comprising the steps of:
• supplying (E0) the booster pump (2) via the second supply line (7) if the hydraulic fluid temperature is below a first threshold (S1),
• supplying (E1) the booster pump (2) via the first line (4) and the second supply line (7) if the hydraulic fluid temperature is between the first threshold (S1) and a second threshold (S2), the percentage of hydraulic fluid flow rate coming from the second line (7) changing continuously between 100% and 0%, as the temperature of the hydraulic fluid changes between the first temperature threshold (S1) and the second temperature threshold (S2), and
• supplying (E2) the booster pump (2) via the first supply line (4) if the hydraulic fluid temperature is above the second threshold (S2).
